# EUROPEAN PATENT APPLICATION

(11) **EP 4 596 942 A1**
(43) Date of publication of application: **06.08.2025**
(21) Application number: 25151761.1
(22) Date of filing: 14.01.2025
(51) Int. Cl.: F16L 27/08, F16L 29/02

(54) **COUPLING ASSEMBLY FOR LIQUID COOLING SYSTEM**

(30) Priority: 31.01.2024 US 202463627217 P; 22.03.2024 US 202463568845 P
(71) Applicant: Cooler Master Co., Ltd., Taipei City 114065 (TW)
(72) Inventor: TSENG, Hsiang-Chieh, Taipei City (TW); OU, Yun-Hsiu, Taipei City (TW); CHEN, Yung Hao, Taipei City (TW)
(74) Representative: Grünecker Patent- und Rechtsanwälte PartG mbB

(57) **Abstract**

A coupling assembly (100) for a blind mate fluid coupling includes a housing, a sliding base (126) disposed within the housing, the sliding base having an internal passage (134) with a first portion and a second portion connected at a middle opening, the internal passage extend in an axial direction, the second portion has a larger diameter than the first portion, the sliding base being movable in a radial direction that is perpendicular to the axial direction and relative to the housing, and an inlet valve (128) that is at least partially disposed in the internal passage, the inlet valve being movable in the axial direction within the internal passage and angularly pivotable at the first portion.

## Description

### TECHNICAL FIELD

The present disclosure is related to the field of fluid connector, in particular a floating quick fluid connector.

### BACKGROUND

In electronic applications, the fluid connectors are used to connect tubes or pipes to cold plates that require fluid flow for cooling or other similar purposes. Typically, barbed fittings are applied to connect tubes to ports on the cold plates. Specifically, the barb is fixed to the port, and the tube is pushed over the barb to create a secure and fluid-tight connection.

However, there are certain shortcomings with this design . The fixed connection between the barb and the port prevents any movement of the tube. As a result, the assembly is highly sensitive to misalignments during installation. Any minor deviations in positioning might put stress on the tube and the connection, perhaps resulting in damage or leaks over time. The tight connection makes detaching and reconnecting tubes during maintenance or component replacements difficult. Significant force is often required to remove the tube from the barb, which might damage the tubing or surrounding components, particularly in densely packed systems.

The aforementioned constraints are especially apparent in applications that require frequent maintenance or where exact alignment is difficult to accomplish. Because the connector or tube cannot support axial or angular movement, it may undergo mechanical stress, wear, and ultimately fail.

### SUMMARY

Aspects of the disclosure provide a coupling assembly for a blind mate fluid coupling. The coupling assembly includes a housing, a sliding base disposed within the housing, the sliding base having an internal passage comprising a first portion and a second portion connected at a middle opening, the internal passage extend in an axial direction, the second portion of the internal passage has a larger diameter than the first portion of the internal passage, the sliding base being movable in a radial direction that is perpendicular to the axial direction and relative to the housing, and an inlet valve at least partially disposed in the internal passage, the inlet valve being movable in the axial direction within the internal passage and angularly pivotable at the first portion.

In an embodiment, the first portion can have a first opening opposite the middle opening, the first opening is smaller than the middle opening, and the inlet valve is angularly pivotable at the first opening.

In an embodiment, the first portion can have a first opening opposite the middle opening, the first opening is larger than the middle opening, and the inlet valve is angularly pivotable at the middle opening.

In an embodiment, the coupling assembly can further include a first spring disposed in the second portion of the internal passage, the first spring is compressible by the inlet valve in the axial direction.

In an embodiment, the second portion of the internal passage includes a second opening opposite to the middle opening, and the coupling assembly further includes a cap structure on the sliding base that caps the first spring and the inlet valve.

In an embodiment, the sliding base includes a wedge structure on an outer surface of the sliding base and disposed within the housing.

In an embodiment, the coupling assembly can further include a second spring disposed in the housing; and a sliding sleeve disposed in the housing that includes a supporting structure with a first side adjacent to the second spring and a second side adjacent to the wedge structure, wherein the second spring is configured to be compressed by the sliding sleeve in response to the sliding base moving in the radial direction, and the second spring is configured to return the sliding base to a center position when no compression force is applied.

In an embodiment, the coupling assembly can further include a first spring surrounding at least a portion of the inlet valve and is compressible by the inlet valve. In an embodiment, the inlet valve includes a clip at an outer surface of the inlet valve and disposed in the internal passage.

In an embodiment, the first portion has a first opening opposite the middle opening, the second portion has a second opening opposite the middle opening, and an outlet valve is at least partially disposed in the second portion through the second opening and connected with the inlet valve within the second portion.

In an embodiment, the first portion has a first opening opposite the middle opening, the second portion has a second opening opposite the middle opening, and an outlet valve disposed outside of the internal passage and connected with an end of the inlet valve that is positioned outside of first opening of the first portion.

In an embodiment, the inlet valve is configured to connect with a quick connect fitting. In an embodiment, the inlet valve is a quick connect fitting.

Aspects of the disclosure provide another coupling assembly for a blind mate fluid coupling. The coupling assembly can include a housing, a sliding base at least partially disposed in the housing, the sliding base having a wedge structure on an outer surface of the sliding base and an internal passage that has a first portion and a second portion connected at a middle opening, the internal passage extend in an axial direction, the second portion has a larger diameter than the first portion, the wedge structure is disposed within the housing, and the sliding base being movable in a radial direction that is perpendicular to the axial direction and relative to the housing, an inlet valve that is at least partially disposed in the internal passage, the inlet valve being movable in the axial direction within the internal passage and angularly pivotable at the first portion, and a sliding sleeve disposed in the housing that includes an supporting structure with a first side adjacent to a first spring disposed in the housing and a second side adjacent to the wedge structure, wherein the first spring is configured to be compressed by the sliding sleeve in response to the sliding base moving in the radial direction, and the first spring is configured to return the sliding base to a center position when no compression force is applied.

### BRIEF DESCRIPTION OF DRAWINGS

Aspects of the present disclosure can be understood from the following detailed description when read with the accompanying figures. It is noted that, in accordance with the standard practice in the industry, various features are not drawn to scale. In fact, the dimensions of the various features may be increased or reduced for clarity of discussion.
Fig. 1A illustrate a perspective view of a coupling assembly 100 according to an embodiment of the present disclosure.
Fig. 1B illustrate a cross-section view of the coupling assembly 100 as in Fig. 1A.
Figs. 2A-2B illustrate cross-section views of the coupling assembly 100 while in radial movement according to an embodiment of the present disclosure.
Figs. 3A-3B illustrate cross-section views of the coupling assembly 100 while in axial movement according to an embodiment of the present disclosure.
Figs. 4A-4C illustrate cross-section views of the coupling assembly 100 while in angular movement according to an embodiment of the present disclosure.
Figs. 5A-5B illustrate cross-section views of a coupling assembly 100A while in axial movement according to an embodiment of the present disclosure.
Figs. 6A-6C illustrate cross-section views of a coupling assembly 100B while in radial movement according to an embodiment of the present disclosure.
Fig. 7 illustrates a cross-section view of a coupling assembly 100C with a quick connect fitting 162C according to an embodiment of the present disclosure.
Figs. 8A-8B illustrate perspective views of the coupling assembly 200 according to an embodiment of the present disclosure.
Fig. 8C illustrate a cross-section view of the coupling assembly 200 as in Fig. 8A.
Figs. 9A-9B illustrate cross-section views of a coupling assembly 200 while in axial movement according to an embodiment of the present disclosure.
Figs. 10A-10C illustrate cross-section views of the coupling assembly 200 while in radial movement according to an embodiment of the present disclosure.
Figs. 11A-11C illustrate cross-section views of the coupling assembly 200 while in angular movement according to an embodiment of the present disclosure.
Figs. 12A-12C illustrate cross-section views of a coupling assembly 200A while in radial movement according to an embodiment of the present disclosure.
Figs. 13A-13B illustrate cross-section views of a coupling assembly 200B while in axial movement according to an embodiment of the present disclosure.
Figs. 14A-14B illustrate cross-section views of a coupling assembly 200C while in axial movement according to an embodiment of the present disclosure.
Fig. 15 illustrates a cross-section view of a coupling assembly 200D with a quick connect fitting 264D according to an embodiment of the present disclosure.
Figs. 16A-16B illustrate perspective views of the coupling assembly 300 according to an embodiment of the present disclosure.
Fig. 16C illustrate a cross-section view of the coupling assembly 300 as in Fig. 16A.
Figs. 17A-17B illustrate cross-section views of a coupling assembly 300 while in axial movement according to an embodiment of the present disclosure.
Figs. 18A-18B illustrate cross-section views of the coupling assembly 300 while in radial movement according to an embodiment of the present disclosure.
Figs. 19A-19C illustrate cross-section views of the coupling assembly 300 while in angular movement according to an embodiment of the present disclosure.
Fig. 20 illustrates a cross-section view of the enlarged sliding base 304 of the coupling assembly 300 as shown in Figs. 16A-16C.
Figs. 21A-21B illustrate perspective views of the coupling assembly 400 according to an embodiment of the present disclosure.
Fig. 21C illustrate a cross-section view of the coupling assembly 400 as in Fig. 21A.
Figs. 22A-22B illustrate cross-section views of a coupling assembly 400 while in axial movement according to an embodiment of the present disclosure.
Figs. 23A-23B illustrate cross-section views of the coupling assembly 400 while in radial movement according to an embodiment of the present disclosure.
Figs. 24A-24C illustrate cross-section views of the coupling assembly 400 while in angular movement according to an embodiment of the present disclosure.

### DETAILED DESCRIPTION

Detailed descriptions and technical contents of the present invention are illustrated below in conjunction with the accompanying drawings. However, it is to be understood that the descriptions and the accompanying drawings disclosed herein are merely illustrative and exemplary and not intended to limit the scope of the present invention.

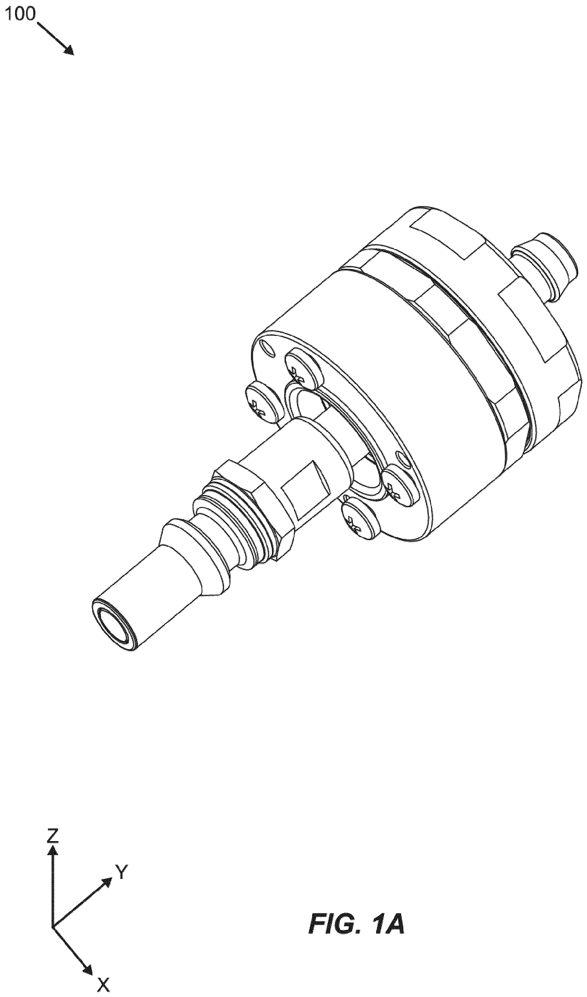

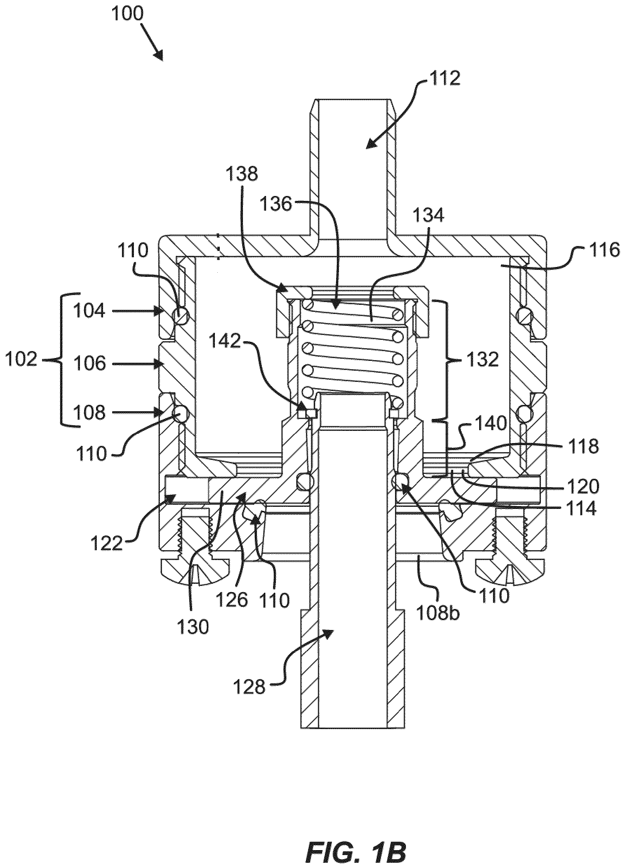

Fig. 1A illustrate a perspective view of a coupling assembly 100 according to an embodiment of the present disclosure. Fig. 1B illustrate a cross-section view of the coupling assembly 100 as in Fig. 1A.

Referring to Fig. 1B, the coupling assembly 100 includes a housing unit 102 that comprises a top cap 104, a middle sleeve 106, and a bottom cap 108. To prevent liquid leaks, the housing unit may have O-rings 110 positioned between the top cap 104 and the middle sleeve 106 as well as between the bottom cap 108 and the middle sleeve 106. The top cap 104 can include a protruding portion 112 that can be employed as an outlet valve. The protruding portion 112 can connect to an outlet pipe or tube, allowing cooling fluid to flow to other parts of the system. The protruding portion 112 can include any suitable fastening feature such as barb portion, outer threads, inter threads, tube, *etc.*

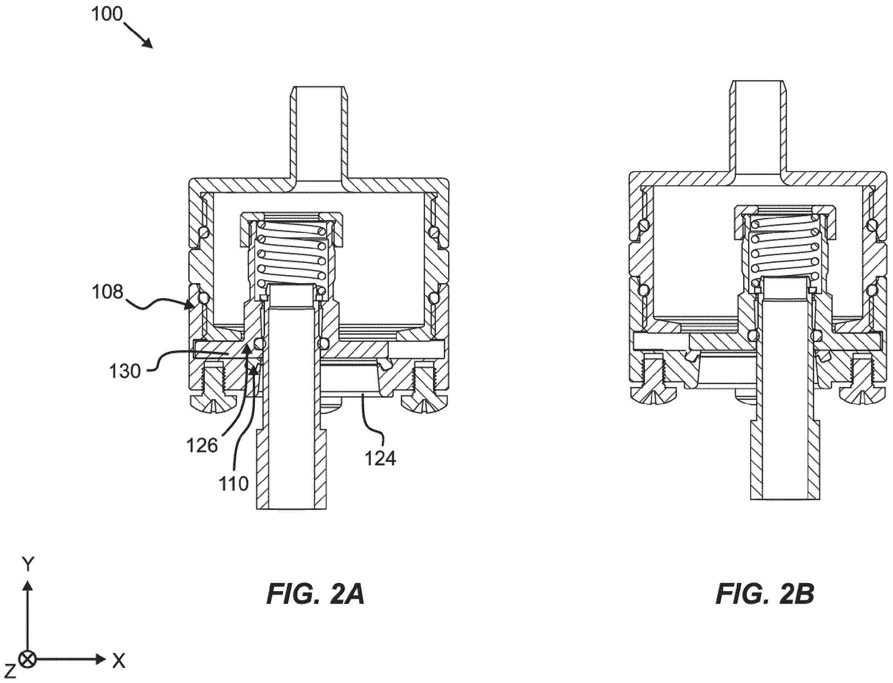

The middle sleeve 106 has a small opening 114 at a first end close to the bottom cap 108 and a large opening 116 at a second end close to the top cap 104. The small opening 114 has an inner surface 118 and an edge 120. The bottom cap 108 has a groove 122 on the inner surface of the bottom cap 108. The bottom cap 108 further has an opening 124 (see Fig. 2A). When assembled with the middle sleeve 106, the groove 122 is adjacent to the first end of the middle sleeve 106. The top cap 104, the middle sleeve 106, and the bottom cap 108 can assemble together to form the housing unit 102 and create a cavity within the housing unit 102.

The coupling assembly 100 can further include a sliding base 126 and an inlet valve 128. The sliding base 126 is located within the cavity of the housing unit 102. The inlet valve 128 may be partially positioned within the cavity of the housing unit 102. The sliding base 126 has a first end and a disc portion 130 positioned at the first end. The sliding base 126 further has a second end and a tube portion 132 positioned at the second end. The disc portion 130 can sit in the groove 122 of the bottom cap 108 of the housing unit 102. The disc portion 130 has a larger diameter than either the small opening 114 of the middle sleeve 106 or the opening 124 of the bottom cap 108. Thus, the disc portion 130 is restricted between the bottom cap 108 and the middle sleeve 106 while still be able to provide radial movement in the x-direction and z-direction (i.e., radial movement in the x-z plane).

The sliding base 126 has an internal passage 134 runs through the sliding base 126. The inlet valve 128 is partially disposed in the internal passage 134 from the first end of the sliding base 126. An axial spring 136 is disposed within the internal passage 134 in the tube portion 132. A spring cap 138 can be fixed to the second end of the sliding base 126, preventing the axial spring 136 from sliding out of the sliding base 126. A clip 142 can be attached near the end of the inlet valve 128 inserted into the internal passage 134 to prevent the inlet valve 128 being removed easily. Furthermore, the clip 142 can compress the axial spring 136 in the axial direction *(i.e.,* + y-direction) when the inlet valve 128 is pushed inward. As such, the coupling assembly 100 can provide axial movement by utilizing the axial spring 136 in the y-direction.

The internal passage 134 comprises a gradually narrowed portion 140 that gradually narrows towards the first end of the sliding base 126. An O-ring 110 is provided for sealing purposes when the inlet valve 128 is inserted into the internal passage 134. Due to some space in the gradually narrowed portion 140 of the internal passage 134, the inlet valve 128 is able to move angularly. The inlet valve 128 can pivot near the first end of the sliding base 126 to angularly move few degrees, thereby giving the connector flexibility to lower mechanical stress either during assembling or disassembling of the system. The inlet valve 128 has an internal passage where the cooling fluid flows.

The coupling assembly 100 as shown in Figs. 1A-1B may provide axial movement, radial movement, and angular movement to lower the mechanical stress of the connector during assembly and disassembly. Figs. 2A-4C illustrate the coupling assembly 100 in each different movement.

Figs. 2A-2B illustrate cross-section views of the coupling assembly 100 while in radial movement according to an embodiment of the present disclosure. The disc portion 130 of the sliding base 126 is restricted between the bottom cap 108 and the middle sleeve 106, preventing any axial movement of the sliding base 126. The disc portion 130 may have a diameter larger than either the small opening 114 of the middle sleeve 106 or the opening 124 of the bottom cap 108. An O-ring 110 is located close to the opening 124 of the bottom cap 108 and adjacent to the outer surface of the disc portion 130 to prevent leak of cooling fluid. The disc portion 130 is capable of radially movement between the bottom cap 108 and the middle sleeve 106, allowing the sliding base 126 to also move radially. Furthermore, the sliding base 126 has the capability to halt at any position since the O-ring 110 can offer fraction.

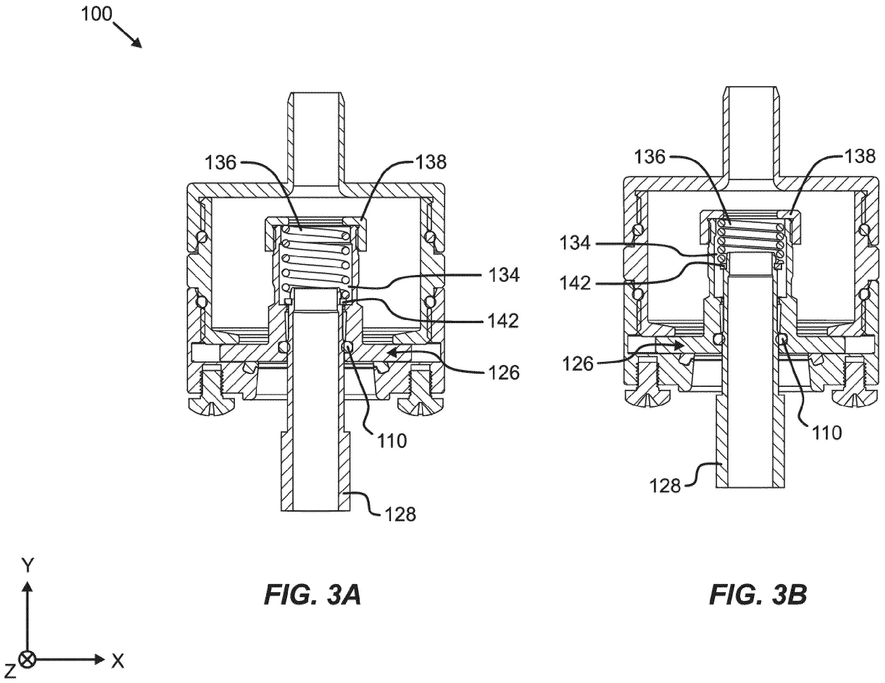

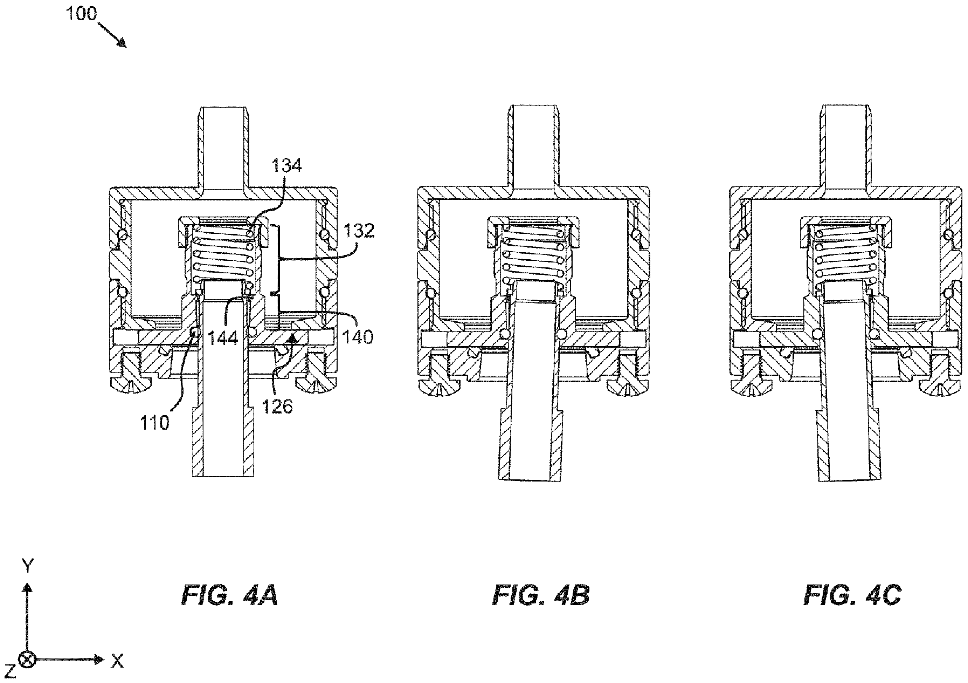

Figs. 3A-3B illustrate cross-section views of the coupling assembly 100 while in axial movement according to an embodiment of the present disclosure. A clip 142 can be attached near the end of the inlet valve 128 inserted into the internal passage 134 to prevent the inlet valve 128 being removed easily. A spring cap 138 can be fixed to the second end of the sliding base 126, preventing the axial spring 136 from sliding out of the sliding base 126. An O-ring 110 between the sliding base 126 and the inlet valve 128 may prevent leak of cooling fluid. In resting position as shown in Fig. 3A, the axial spring 136 is decompressed and sits on the clip 142. The clip 142 is sitting on a supporting structure 144 (see Fig. 4A), preventing the inlet valve 128 being remove easily. When the inlet valve 128 is pushed in the axial direction (i.e., in the + y-direction), the axial spring 136 compresses, allowing the inlet valve 128 to move axially in the + y direction. When the inlet valve 128 is not long pushed in the + y-direction, the axial spring 136 can decompress and return the inlet valve 128 to its resting position.

Figs. 4A-4C illustrate cross-section views of the coupling assembly 100 while in angular movement according to an embodiment of the present disclosure. The internal passage 134 includes a gradually narrowed portion 140 that gradually narrows towards the first end of the sliding base 126. That is, the opening diameter of the gradually narrowed portion 140 near the supporting structure 144 is larger than the opening diameter of the first end of the sliding base 126. The O-ring 110 between the sliding base 126 and the inlet valve 128 may prevent leak of cooling fluid. The inlet valve 128 can pivot near the first end of the sliding base 126 to angularly move few degrees which can provide flexibility to the connector to lower mechanical stress during assembling or disassembling of the system. For example, as shown in Figs. 4B and 4C, the inlet valve can tilt in the x-direction and z-direction, or in circular on the x-z plane.

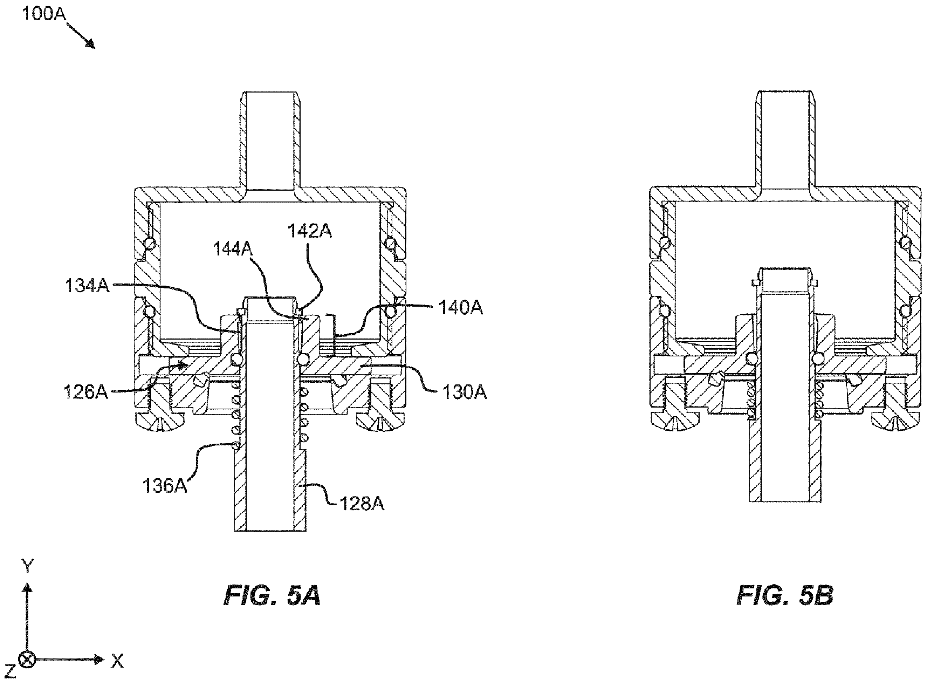

Figs. 5A-5B illustrate cross-section views of a coupling assembly 100A while in axial movement according to an embodiment of the present disclosure. The coupling assembly 100A is similar to the coupling assembly 100 disclosed in Figs. 1A-1B and 3A-3B. The difference is the placement of the axial spring. An axial spring 136A is positioned outside of the housing unit 102A, and the inlet valve 128A runs through the axial spring 136A and has a supporting structure for the axial spring 136A to sit on. Since the axial spring 136A is located outside of the sliding base 126A, the tube portion is no longer needed. The sliding base 126A still includes a disc portion 130A, the gradually narrowed portion 140A and the supporting structure 144A. The clip 142A is attached near the end of the inlet valve 128A inserted into the internal passage 134A, preventing the inlet valve 128A being removed easily. In addition, the spring cap is no longer needed for capping the axial spring. In resting position, as shown in Fig. 5A, the axial spring 136A is decompressed and sits on the supporting structure of the inlet valve 128A. The clip 142A is sitting on a supporting structure 144A, preventing the inlet valve 128A from being remove easily. When the inlet valve 128A is pushed in the axial direction (i.e., in the + y-direction), the axial spring 136A compresses, allowing the inlet valve 128A move axially in the + y direction. When the inlet valve 128A is not long pushed in the + y-direction, the axial spring 136A can decompress and return the inlet valve 128A to its resting position.

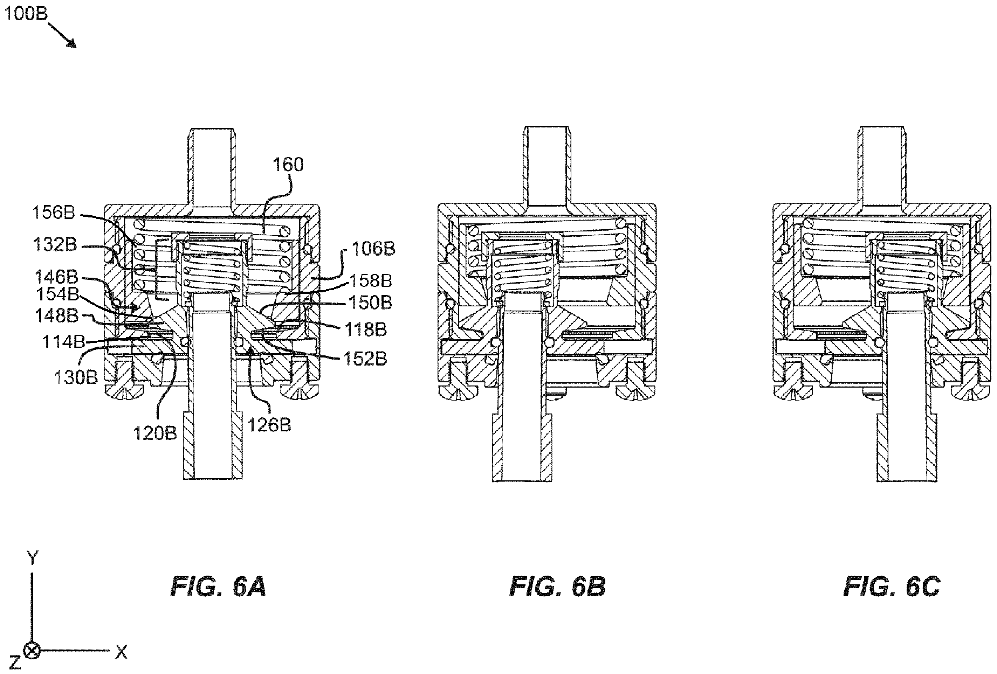

Figs. 6A-6C illustrate cross-section views of a coupling assembly 100B while in radial movement according to an embodiment of the present disclosure. The coupling assembly 100B is similar to the coupling assembly 100 disclosed in Figs. 1A-1B and 3A-3B. The difference is that the coupling assembly 100B can automatically return the inlet valve 128B to its center position. The coupling assembly 100B further includes a sliding sleeve 146B positioned in the cavity of the housing unit 102. The sliding base 126B includes a wedge structure 148B located between the disc portion 130B and the tube portion 132B. The edge 120B of the small opening 114B of the middle sleeve 106B is positioned between the disc portion 130B and the wedge structure 148B. The wedge structure 148B has a first surface 150B and a second surface 152B. The first surface 150B is adjacent to with the inner surface 118B of the small opening 114B of the middle sleeve 106B. The second surface 152B is an inclined surface.

The sliding sleeve 146B has a small opening 154B and a large opening 156B. The small opening 154B has a slightly smaller diameter than the diameter of the wedge structure 148B, and the edge of the small opening 154B sits on the second surface 152Bof the wedge structure 148B of the sliding base 126B. In this way, when the sliding base 126B is moving radially on the x-z plane, the sliding sleeve 146B can be pushed in the axial direction (i.e., + y-direction) due to the inclined second surface 152B. The sliding sleeve 146B may comprise a supporting structure 158B close to the small opening 154B which provides support to a radial spring 160. When the sliding base 126B is moving radially in the x-z plane and the sliding sleeve 146B is pushed in the + y-direction, the radial spring 160 is compressed. When the sliding sleeve 146B is no long being pushed in the y-direction, the radial spring 160 would decompress and return the sliding base 126B to the center position due to the inclined second surface 152B. Therefore, the coupling assembly 100B can provide automatic return of the inlet valve 128B to the center position.

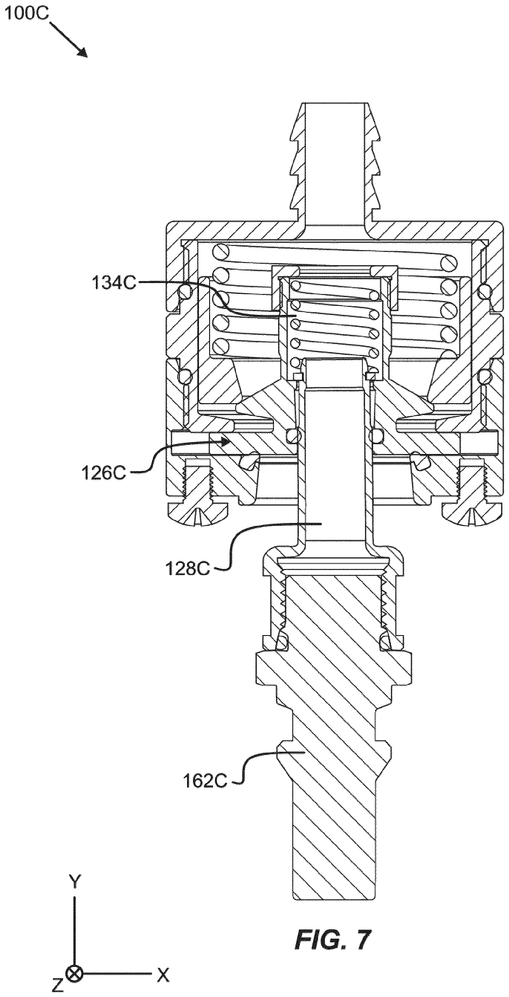

Fig. 7 illustrates a cross-section view of a coupling assembly 100C with a quick connect fitting 162C according to an embodiment of the present disclosure. The coupling assembly 100C is similar to the coupling assembly 100B disclosed in Figs. 6A-6C. The difference is that the inlet valve 128C is configured to receive a quick connect fitting 162C. The inlet valve 128C has one end that is inserted into the internal passage 134C of the sliding base 126C, and has the other end configured to receive a quick connect fitting 162C. The quick connect configuration can be adopted in a wide range of applications and can improve the efficiency of coupling assembly 100C in the assembly and disassembly process.

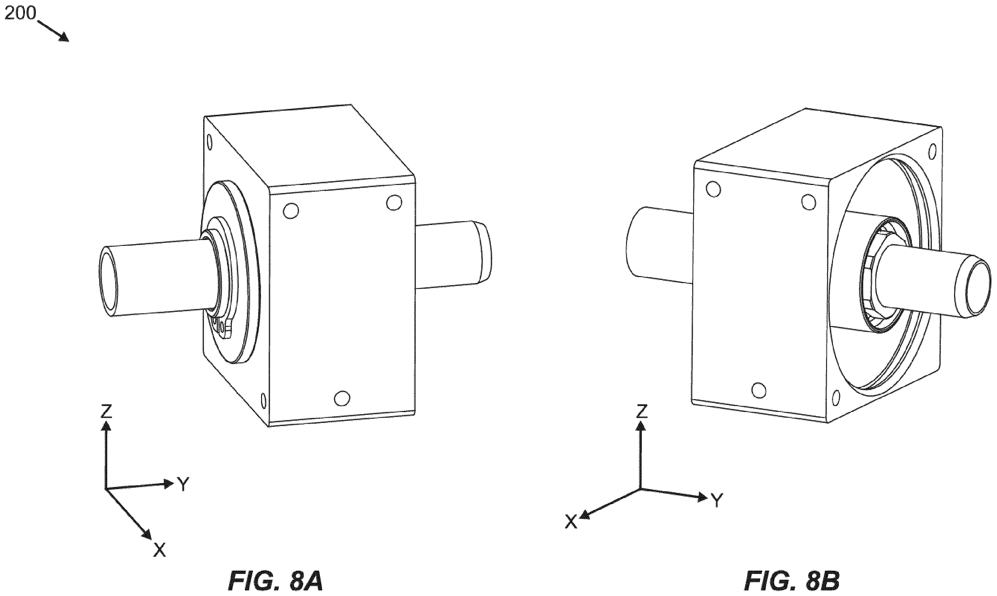

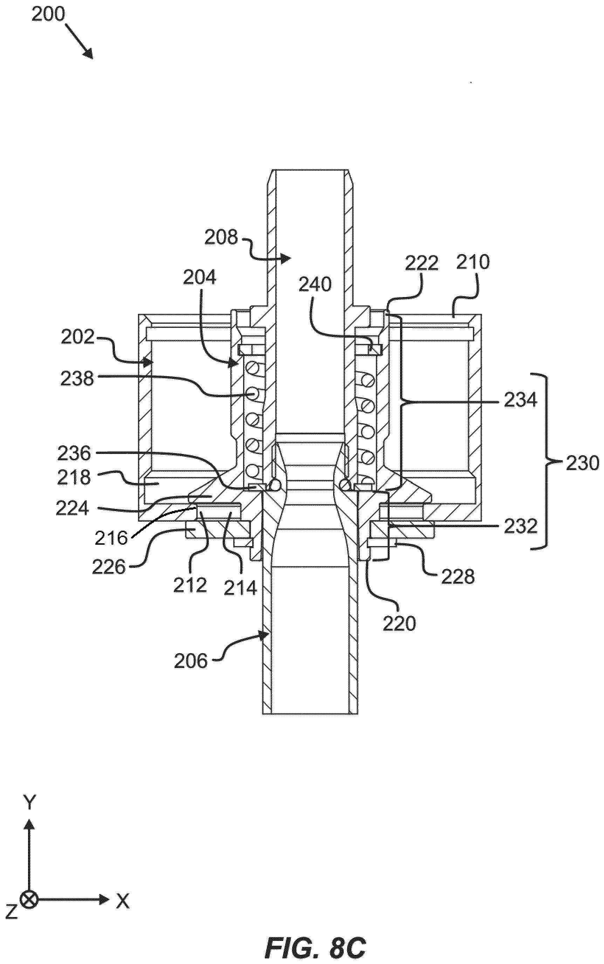

Figs. 8A-8C illustrate a coupling assembly 200 according to an embodiment of the present disclosure. Figs. 8A-8B illustrate perspective views of the coupling assembly 200. Fig. 8C illustrate a cross-section view of the coupling assembly 200. The coupling assembly 200 is similar to the coupling assembly 100 as shown in Figs. 1A-1B.

Referring to Fig. 8C, the coupling assembly 200 includes a housing unit 202, a sliding base 204, an inlet valve 206, and an outlet valve 208. Compare to coupling assembly 100 as shown in Figs. 1A-1C, the housing unit 202 is a single piece unit. The housing unit 202 includes a large opening 210 and a small opening 212. The small opening 212 has an edge 214 and an inner surface 216. The housing unit 202 further has a groove 218 on the inner surface and located near the small opening 212.

The sliding base 204 is positioned in a cavity of the housing unit 202. A first end 220 is inserted into the small opening 212 of the housing unit 202, and the second end 222 is positioned near the large opening 210 of the housing unit 202. The sliding base 204 has a wedge structure 224 sitting on the inner surface 216 of the small opening 212 of the housing unit 202. A washer 226 is positioned near the first end 220 of the sliding base 204 so that the small opening 212 of the housing unit 202 is positioned between the washer 226 and the wedge structure 224. Thus, the sliding base 204 is secured to the housing unit 202. A clip 228 can be utilized to secure the washer 226 from sliding out of the sliding base 204. The sliding base 204 comprises an internal passage 230. The internal passage 230 has a gradually narrowed portion 232 from the first end 220 of the sliding base 204 to the washer 236 and has a tube portion 234 from the washer 236 to the second end 222 of the sliding base 204. The gradually narrowed portion 232 is gradually narrowed from the first end 220 towards the tube portion 234. The tube portion 234 can have a uniform diameter and is larger than the largest diameter of the gradually narrowed portion 232.

The inlet valve 206 is partially disposed in the internal passage 230 of the sliding base 204. Specifically, the inlet valve 206 is disposed in the gradually narrowed portion 232 and partially disposed in the tube portion 234. The outlet valve 208 is partially disposed in the internal passage 230 of the sliding base 204. Specifically, the outlet valve 208 is partially disposed in the tube portion 234 but does not dispose in the gradually narrowed portion 232. A washer 236 is attached to the end of the outlet valve 208 disposed in the tube portion 234, preventing the outlet valve 208 from sliding into the gradually narrowed portion 232. The portion of inlet valve 206 disposed in the tube portion 234 is inserted into the outlet valve 208, allowing the cooling fluid to flow through. An O-ring may be positioned at the connection between the inlet valve 206 and the outlet valve 208 for preventing leak of the cooling fluid. An axial spring 238 is disposed within the internal passage 230 in the tube portion 234 and sleeves the outlet valve 208. One end of the axial spring 238 sits on the washer 236. The sliding base 204 further includes a clip 240 near the second end 222 so that the axial spring 238 is restricted in the tube portion 234 and cannot slides out of the sliding base 204.

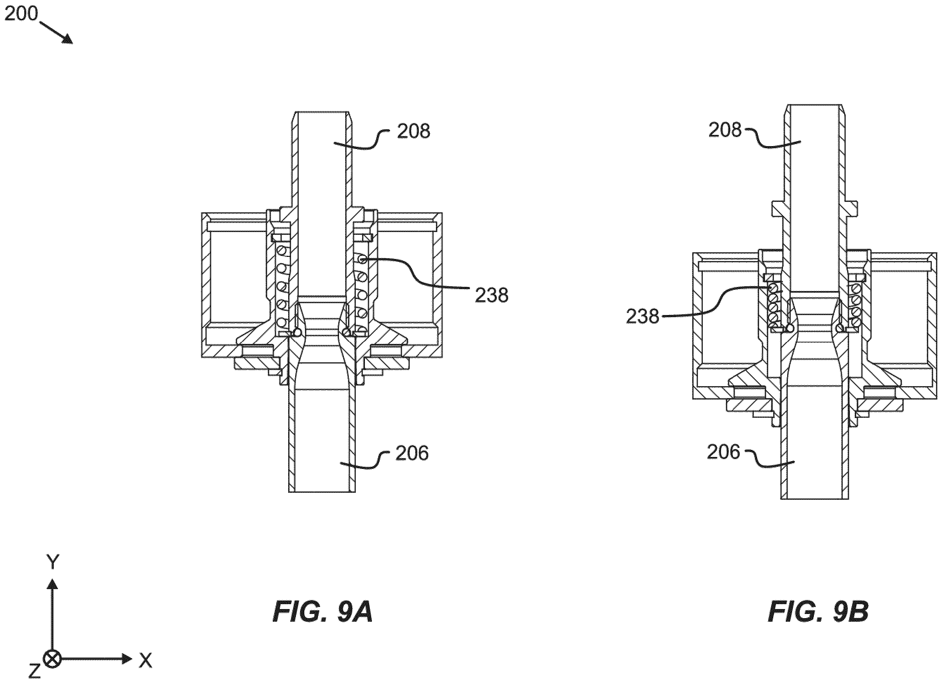

The coupling assembly 200 can provide axial movement, radial movement, and angular movement to the inlet valve 206 to lower the mechanical stress of the connector during assembly and disassembly. Figs. 9A-11C illustrate the coupling assembly 200 in each different movement.

Figs. 9A-9B illustrate cross-section views of a coupling assembly 200 while in axial movement according to an embodiment of the present disclosure. Fig. 9A shows the coupling assembly 200 in its resting position where the axial spring 238 is decompressed. When the inlet valve 206 and outlet valve 208 is pushed in the + y-direction, the axial spring 238 is compressed, allowing axial movement. When the inlet valve 206 and the outlet valve 208 is not being long pushed, the axial spring 238 decompresses and the inlet valve 206 and outlet valve 208 return to their resting position. As such, the coupling assembly 200 can provide axial movement by utilizing the axial spring 238 in the + y-direction.

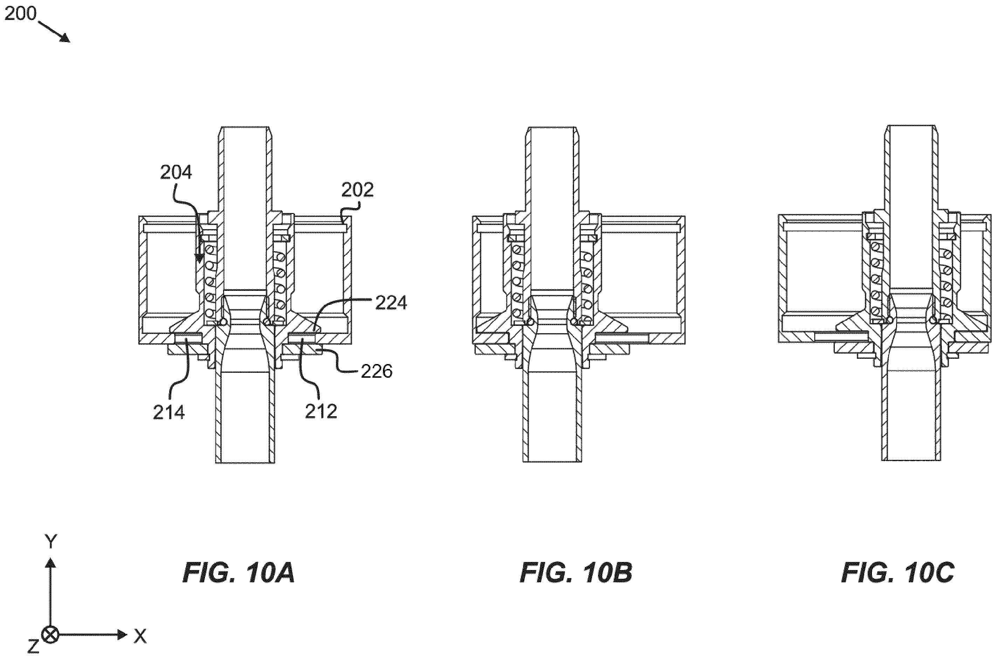

Figs. 10A-10C illustrate cross-section views of the coupling assembly 200 while in radial movement according to an embodiment of the present disclosure. Fig. 10A shows the coupling assembly 200 in its resting position (i.e., center position). The small opening 212 of the housing unit 202 is positioned between the washer 226 and the wedge structure 224 so that the sliding base 204 is not able to move in the y-direction. Specifically, the small opening 212 of the housing unit 202 has a slightly smaller diameter than the diameter of the washer 226 and the wedge structure 224. Further, there is a space left between the edge 214 of the small opening 212 and the sliding base 204 so that the sliding base 204 can move in the x-direction and z-direction. That is, the sliding base 204 can move freely within the small opening 212 on the x-z plane. This way, the coupling assembly 200 can provide radial movement by utilizing the small opening 212 of the housing unit 202.

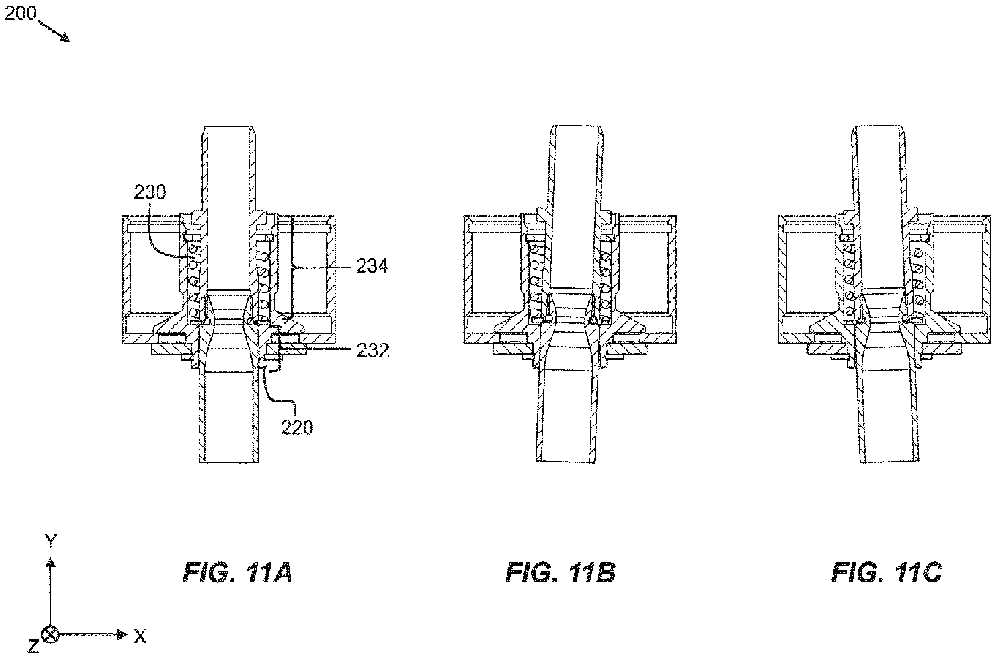

Figs. 11A-11C illustrate cross-section views of the coupling assembly 200 while in angular movement according to an embodiment of the present disclosure. Fig. 11A shows the coupling assembly 200 in its resting position *(i.e.,* center position). The gradually narrowed portion 232 of the internal passage 230 is gradually narrowed from the first end 220 towards the tube portion 234. The inlet valve 206 can pivot at the narrowest section of the gradually narrowed portion 232, moving few degrees angularly. As such, the inlet valve 206 can rotate by utilizing the narrowest section of the gradually narrowed portion 232 as the pivot point.

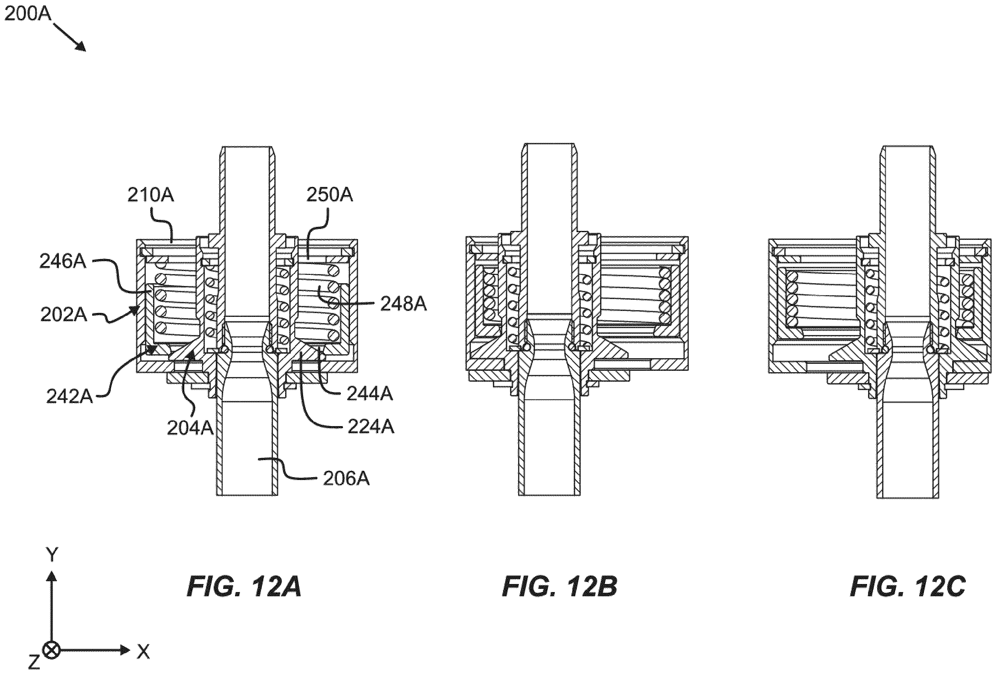

Figs. 12A-12C illustrate cross-section views of a coupling assembly 200A while in radial movement according to an embodiment of the present disclosure. The coupling assembly 200A is similar to the coupling assembly 200 disclosed in Figs. 8A-8C. The difference is that the coupling assembly 200A can automatically return the inlet valve 206A to its center position. The coupling assembly 200A further includes a sliding sleeve 242A positioned in the cavity of the housing unit 202A. The sliding sleeve 242A has a small opening 244A and a large opening 246A. The edge of the small opening 244A sits on the wedge structure 224A of the sliding base 204A. Specifically, the small opening 244A sits on the inclined surface off the wedge structure 224A. A radial spring 248A is disposed in the sliding sleeve 242A and sits on inner surface of the small opening 244A. The housing unit 202A further includes a spring cap 250A near the large opening 210A to prevent the radial spring 248A slides out of the housing unit 202A.

When the sliding base 204A is moving radially in the x-z plane and the sliding sleeve 242A is pushed in the + y-direction by the wedge structure 224A, and the radial spring 248A is compressed. When the sliding sleeve 242A is not being long pushed in the + y-direction, the radial spring 248A can decompress and the sliding base 204A returns to its center position due to the inclined surface of the wedge structure 224A. Therefore, the coupling assembly 200A can provide automatic return of the inlet valve 206A to its center position.

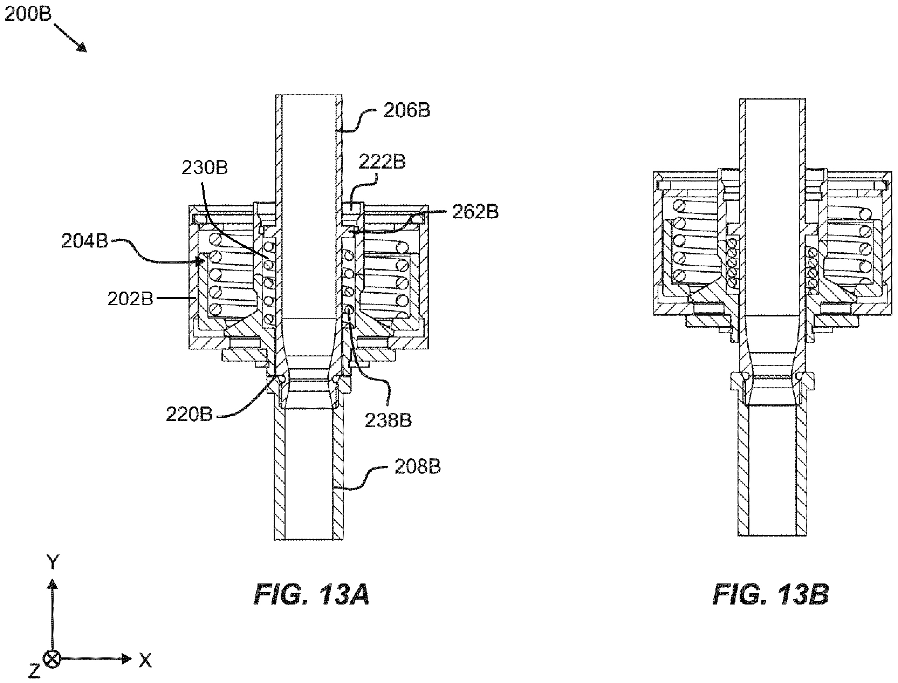

Figs. 13A-13B illustrate cross-section views of a coupling assembly 200B while in axial movement according to an embodiment of the present disclosure. The coupling assembly 200B is similar to the coupling assembly 200A disclosed in Figs. 12A-12C that can provide automatic return of the sliding base 204B. The difference is that the coupling assembly 200B provides reverse axial movement compare to the coupling assembly 200A. As shown in Fig. 13A, the outlet valve 208B is positioned outside of the sliding base 204B. More specifically, the outlet valve 208B is positioned outside of the housing unit 202B. The outlet valve 208B has a wider end that is in connect with the first end 220B of the sliding base 204B so that the outlet valve 208B cannot sliding into the sliding base 204B. The inlet valve 206B is disposed in the internal passage 230B and includes a disc structure 262B near the large opening 222B of the sliding base 204B. The disc structure 262B can act as a spring cap for the axial spring 238B.

As shown in Fig. 13A, the coupling assembly 200B is in rest position where the axial spring 238B is decompressed. When the inlet valve 206B and outlet valve 208B is pushed in the - y-direction, as shown in Fig. 13B, the axial spring 238B is compressed, allowing axial movement. When the inlet valve 206B and the outlet valve 208B is not being long pushed, the axial spring 238B decompresses and return the inlet valve 206B and outlet valve 208B to its resting position. This way, the coupling assembly 200B can provide reverse axial movement by utilizing the axial spring 238B in the - y-direction.

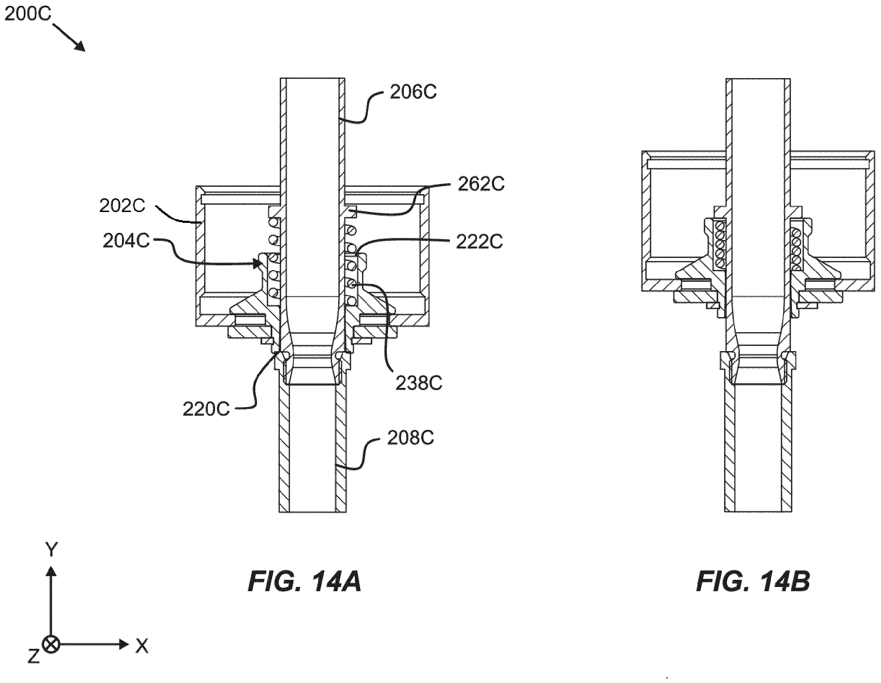

Figs. 14A-14B illustrate cross-section views of a coupling assembly 200C while in axial movement according to an embodiment of the present disclosure. The coupling assembly 200C is similar to the coupling assembly 200B disclosed in Figs. 13A-13B that can provide reverse axial movement. The difference is that the coupling assembly 200C does not provide automatic return of the inlet valve 206C. As shown in Fig. 14A, the outlet valve 208C is positioned outside of the sliding base 204C. Specifically, the outlet valve 208C is positioned outside of the housing unit 202C. The outlet valve 208C has a wider end connected with the first end 220C of the sliding base 204C so that the outlet valve 208C cannot sliding into the sliding base 204C. The inlet valve 206C is disposed in the internal passage 230C and includes a disc structure 262C near the large opening 222C of the sliding base 204C. The disc structure 262C can act as a spring cap for the axial spring 238C.

As shown in Fig. 14A, the coupling assembly 200C is in rest position where the axial spring 238C is decompressed. When the inlet valve 206C and outlet valve 208C are pushed in the - y-direction, as shown in Fig. 14B, the axial spring 238C is compressed, allowing axial movement. When the inlet valve 206C and the outlet valve 208C is not being long pushed, the axial spring 238C decompresses and the inlet valve 206C and outlet valve 208B return to their resting position. As such, the coupling assembly 200C can provide reverse axial movement by utilizing the axial spring 238C in the - y-direction.

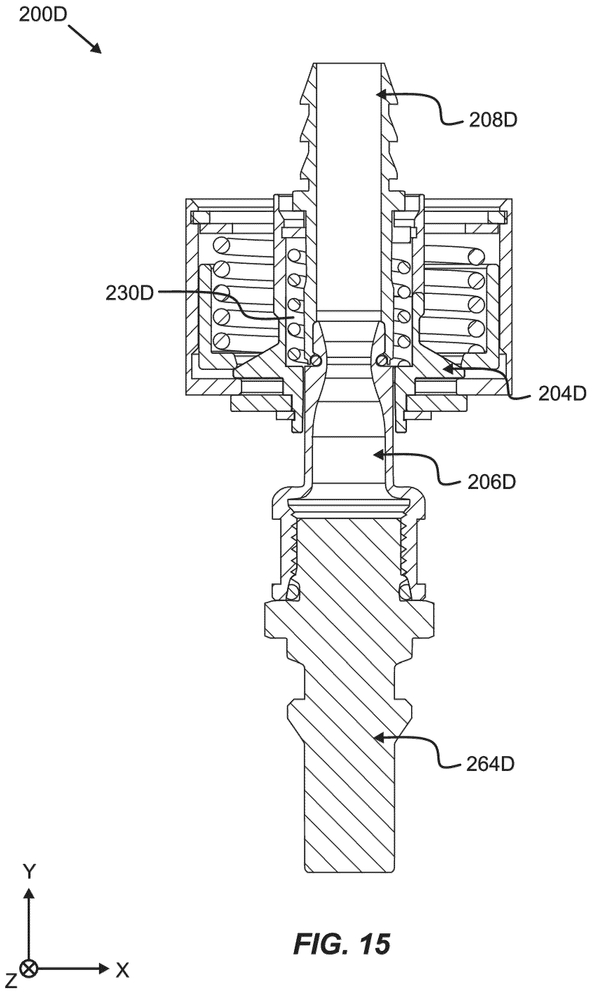

Fig. 15 illustrates a cross-section view of a coupling assembly 200D with a quick connect fitting 264D according to an embodiment of the present disclosure. The coupling assembly 200D is similar to the coupling assembly 200A disclosed in Figs. 12A-12C. The difference is that the inlet valve 206D is configured to receive a quick connect fitting 264D. The inlet valve 206D has one end that is inserted into the internal passage 230D of the sliding base 204D, and has the other end configured to receive the quick connect fitting 264D. The quick connect configuration can be adopted in a wide range of applications and can improve the efficiency of coupling assembly 200D in the assembly and disassembly process.

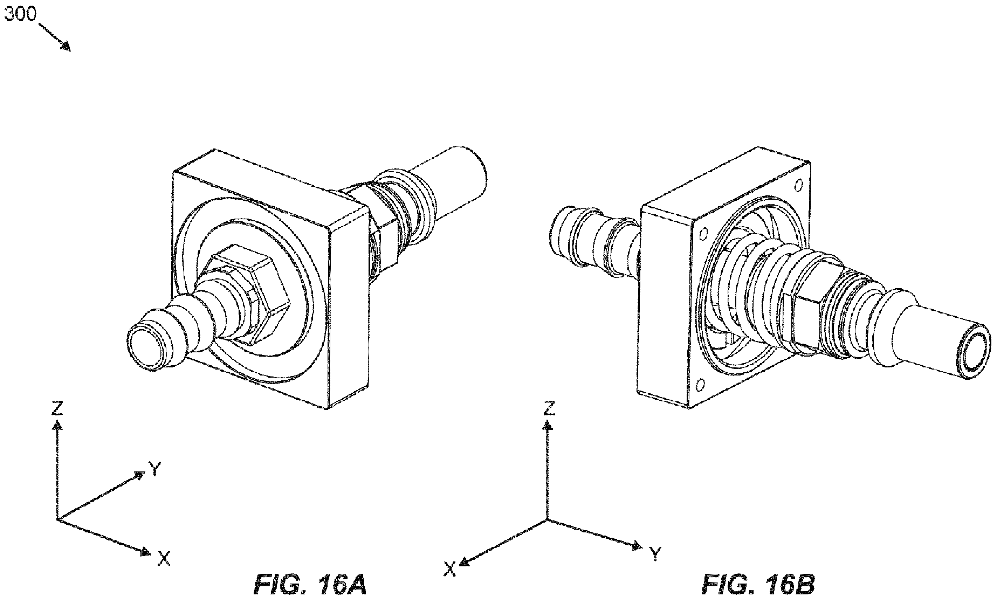

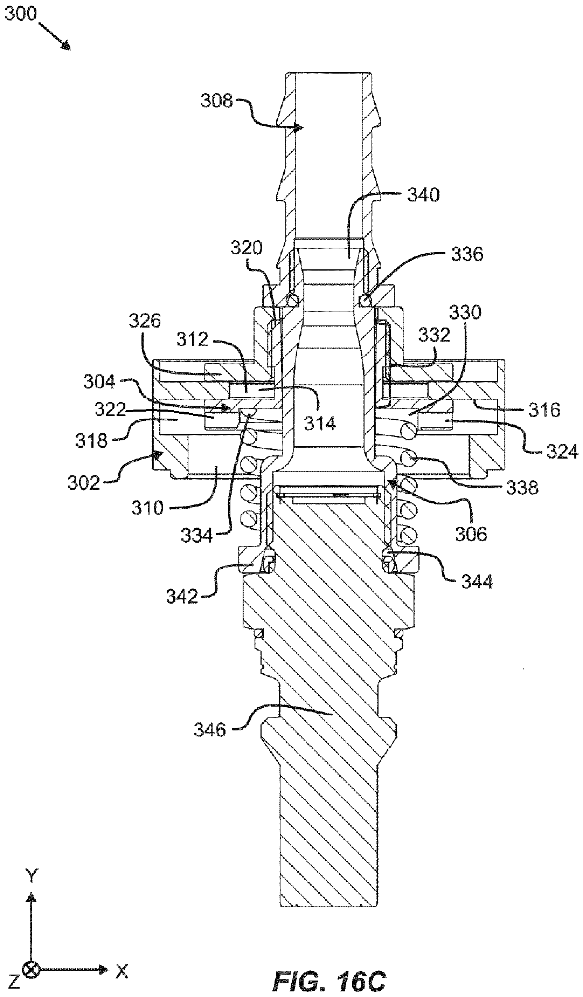

Figs. 16A-16C illustrate a coupling assembly 300 according to an embodiment of the present disclosure. Figs. 16A-16B illustrate perspective views of the coupling assembly 300. Fig. 16C illustrate a cross-section view of the coupling assembly 300. The coupling assembly 300 is similar to the coupling assembly 200 as shown in Figs. 8A-8C.

Referring to Fig. 16C, the coupling assembly 300 includes a housing unit 302, a sliding base 304, an inlet valve 306, and an outlet valve 308. Compare to coupling assembly 200 as shown in Figs. 8A-8C, the housing unit 302 has a reduced size and is suitable for compact design of a cooling system. The housing unit 302 includes a large opening 310 and a small opening 312. The small opening 312 has an edge 314 and an inner surface 316. The housing unit 302 further has a groove 318 on the inner surface of the housing unit 302 and located near the small opening 312.

The sliding base 304 is positioned in the groove 318 of the housing unit 302. A first end 320 is inserted into the small opening 312 of the housing unit 302, and the second end 322 is positioned in the groove 318 of the housing unit 302. Due to the compact size of the coupling assembly 300, the sliding base 304 does not have a wedge structure; instead, the sliding base 304 comprises a disc structure 324 with a recess 334 positioned in the groove 318. A nut 326 is positioned at the first end 320 of the sliding base 304 so that the small opening 312 of the housing unit 302 is positioned between the nut 326 and the disc structure 324. As such, the sliding base 304 is secured to the housing unit 302. The sliding base 304 has an internal passage 330 passing through the sliding base 304. The internal passage 330 has a gradually narrowed portion 332 from the first end 320 that is gradually wider towards the disc structure 324 and connects with the recess 334. The recess 334 has a diameter that is larger than the largest diameter of the gradually narrowed portion 332.

A first end 340 of the inlet valve 306 is inserted into the internal passage 330 from the second end 322 of the sliding base 304 and inserted into the outlet valve 308 at the second end 322 of the sliding base 304, allowing the cooling fluid to flow through. An O-ring 336 is positioned at the connection between the inlet valve 306 and the outlet valve 308, preventing leak of the cooling fluid. An axial spring 338 is disposed in the recess 334 of the disc structure 324 and sleeves the inlet valve 306. One end of the axial spring 338 sits in the recess 334 and the other end of the axial spring 338 sits on a raised edge 342 at a second end 344 of the inlet valve 306. As such, the axial spring 338 cannot slides out of the inlet valve 306. The inlet valve 306 is configured to receive a quick connect fitting 346. The quick connect configuration can be adopted in a wide range of applications and can improve the efficiency of coupling assembly 300 in the assembly and disassembly process.

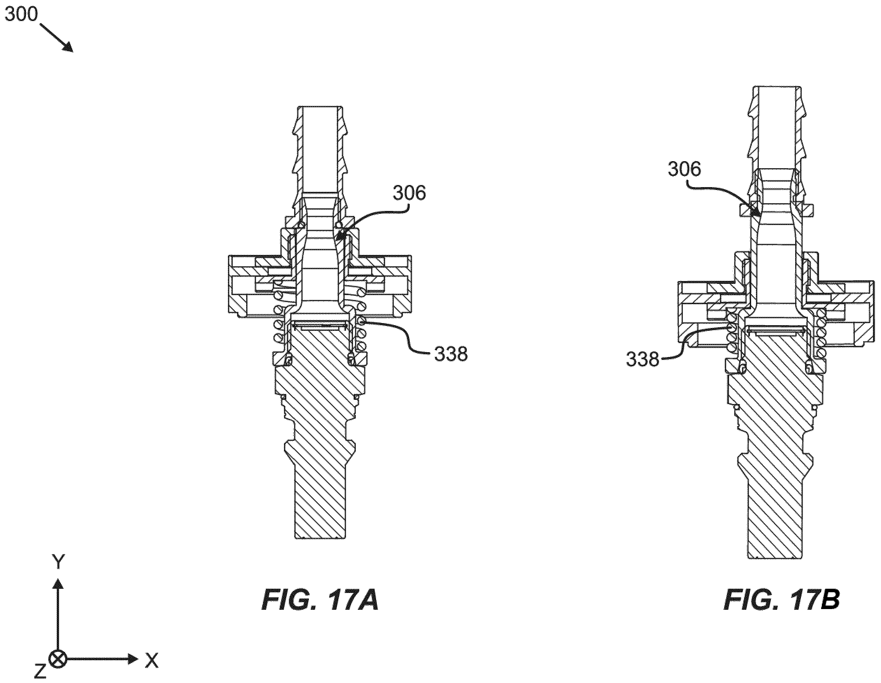

The coupling assembly 300 can provide axial movement, radial movement, and angular movement to the inlet valve 306 to reduce the mechanical stress of the connector during assembly and disassembly. Figs. 17A-19C illustrate the coupling assembly 300 in each different movement.

Figs. 17A-17B illustrate cross-section views of a coupling assembly 300 while in axial movement according to an embodiment of the present disclosure. Fig. 17A shows the coupling assembly 300 in its resting position where the axial spring 338 is decompressed. When the inlet valve 306 is pushed in the + y-direction, the axial spring 338 is compressed, allowing axial movement. When the inlet valve 306 is not being long pushed, the axial spring 338 decompresses and the inlet valve 306 returns to its resting position. As such, the coupling assembly 300 can provide axial movement by utilizing the axial spring 338 in the + y-direction.

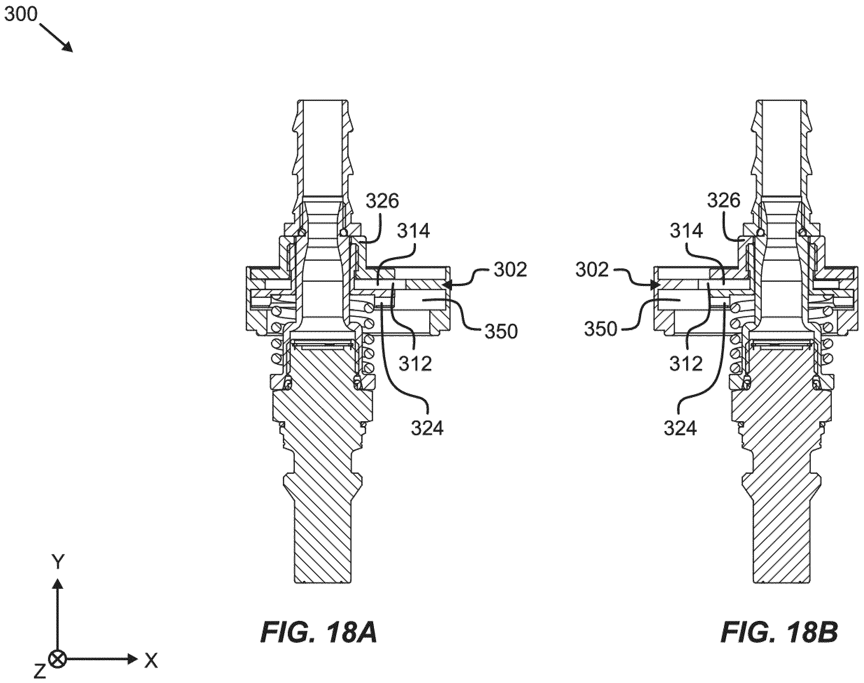

Figs. 18A-18B illustrate cross-section views of the coupling assembly 300 while in radial movement according to an embodiment of the present disclosure. The small opening 312 of the housing unit 302 is positioned between the nut 326 and the disc structure 324 so that the sliding base 304 (see Fig. 16C) is not able to move in the y-direction. Specifically, the small opening 312 of the housing unit 302 has a slightly smaller diameter than the diameter of the nut 326 and the disc structure 324. Further, there is a space 350 is between the edge 314 of the small opening 312 and the sliding base 304 so that the sliding base 304 can move in the x-direction and z-direction. That is, the sliding base 304 can move freely within the small opening 312 on the x-z plane. As such, the coupling assembly 300 can provide radial movement by utilizing the small opening 312 of the housing unit 302.

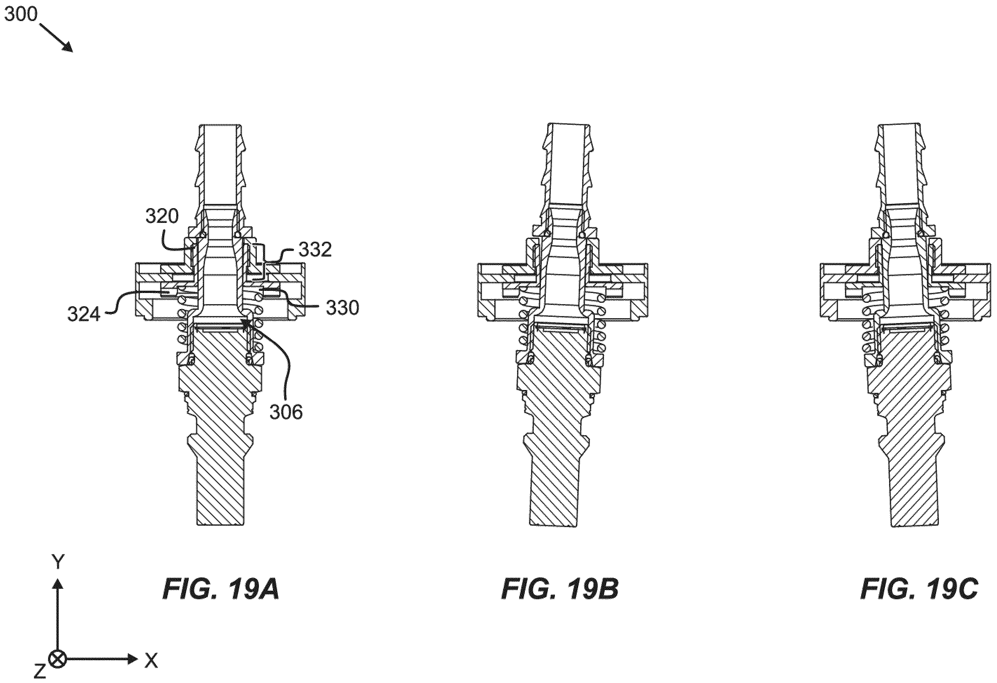

Figs. 19A-19C illustrate cross-section views of the coupling assembly 300 while in angular movement according to an embodiment of the present disclosure. Fig. 19A shows the coupling assembly 300 in its resting position *(i.e.,* center position). The gradually narrowed portion 332 of the internal passage 330 is gradually narrowed from the first end 320 towards the disc structure 324. The inlet valve 306 can pivot at the narrowest section of the gradually narrowed portion 332, angularly moving few degrees. As such, the inlet valve 306 can rotate by utilizing the narrowest section of the gradually narrowed portion 332 as the pivot point.

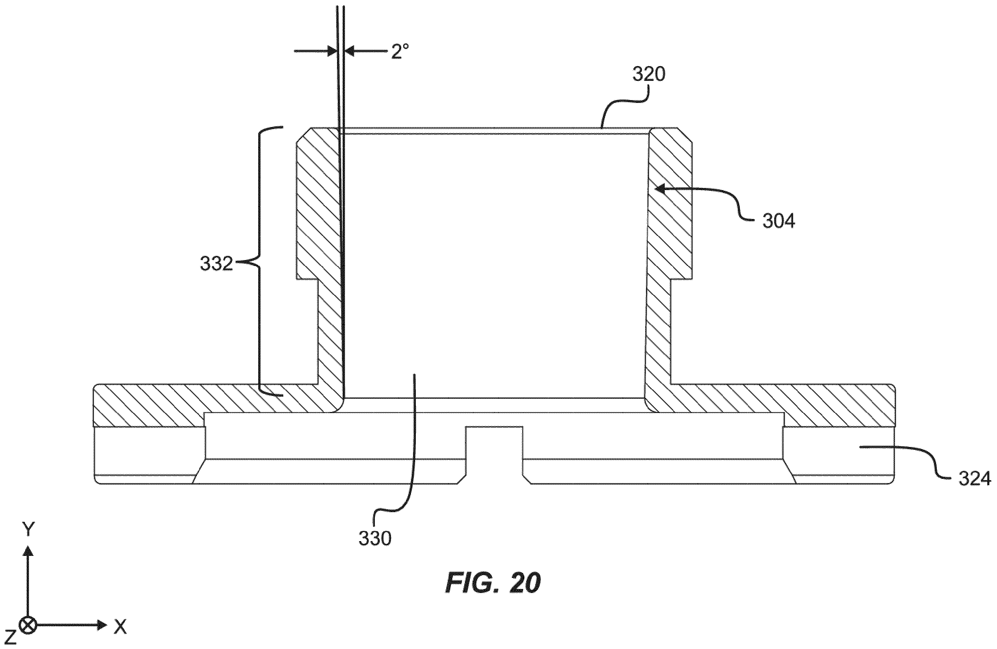

Fig. 20 illustrates an enlarged cross-section view of the sliding base 304 of the coupling assembly 300 as shown in Figs. 16A-16C. The gradually narrowed portion 332 has a 2° taper. That is, the coupling assembly 300 can supply a 2° tile for the inlet valve 306. The coupling assembly is not limited to the 2° taper. Depending on the application of the coupling assembly, the taper size can be set accordingly to provide the desired angular movement.

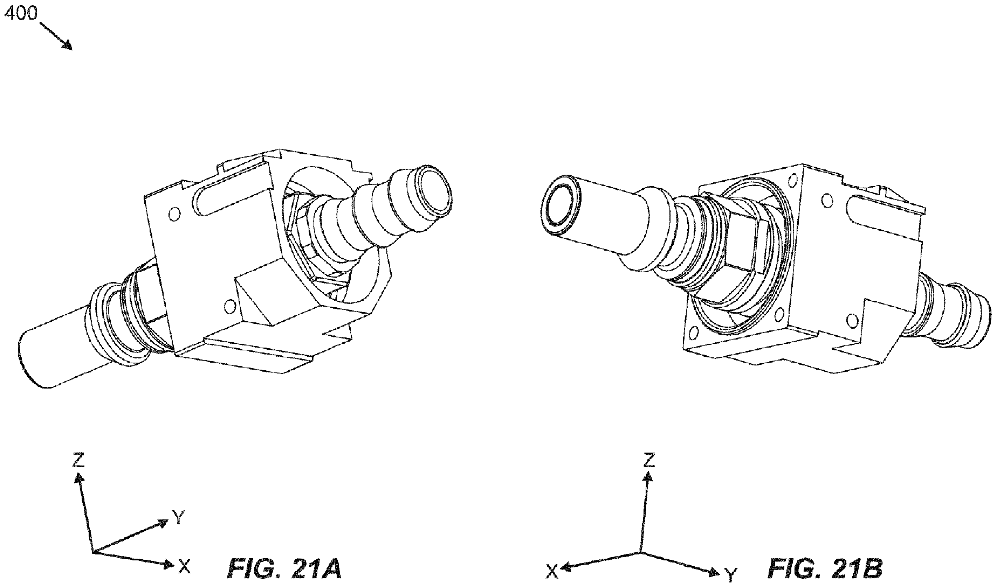

Figs. 21A-21C illustrate a coupling assembly 400 according to an embodiment of the present disclosure. Figs. 21A-21B illustrate perspective views of the coupling assembly 400. Fig. 20C illustrate a cross-section view of the coupling assembly 400. The coupling assembly 400 is similar to the coupling assembly 300 as shown in Figs. 16A-16C.

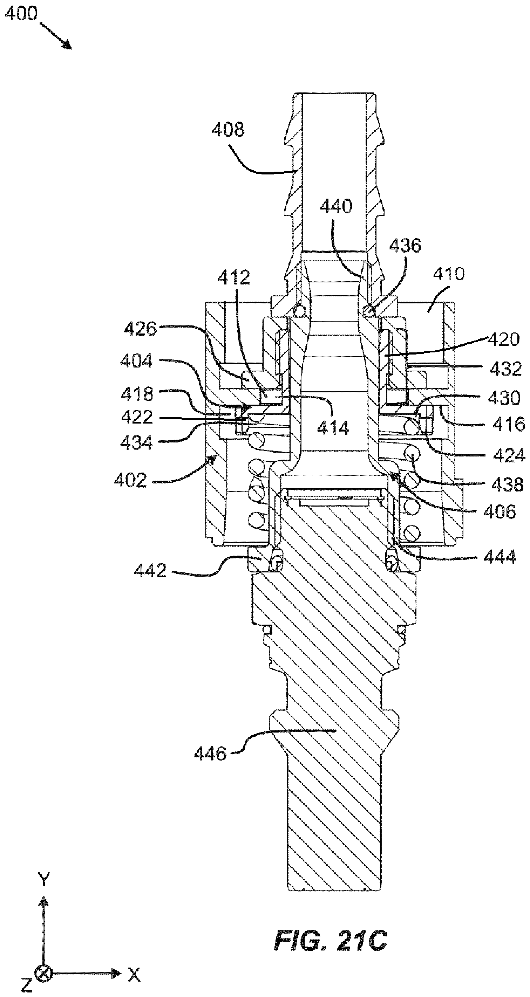

Referring to Fig. 21C, the coupling assembly 400 includes a housing unit 402, a sliding base 404, an inlet valve 406, and an outlet valve 408. Compare to coupling assembly 300 as shown in Figs. 16A-16C, the dimension of the x-direction for the housing unit 402 is narrower, which is suitable for compact design of a cooling system. The housing unit 402 includes a large opening 410 and a small opening 412. The small opening 412 has an edge 414 and an inner surface 416. The housing unit 402 further has a groove 418 on the inner surface and located near the small opening 412.

The sliding base 404 is positioned in the groove 418 of the housing unit 402. A first end 420 of the sliding base 404 is inserted into the small opening 412 of the housing unit 402, and the second end 422 of the sliding base 404 is positioned in the groove 418 of the housing unit 402. Due to the compact size of the coupling assembly 400, the sliding base 404 does not have a wedge structure; instead, a disc structure 424 with a recess 434 is positioned in the groove 418. A nut 426 is positioned at the first end 420 of the sliding base 404 so that the small opening 412 of the housing unit 402 is positioned between the nut 426 and the disc structure 424. As such, the sliding base 404 is secured to the housing unit 402. The sliding base 404 has an internal passage 430. The internal passage 430 has a gradually narrowed portion 432gradually narrowed from the first end 420 towards the disc structure 424 and connects with the recess 434. The recess 434 has a diameter that is larger than the largest diameter of the gradually narrowed portion 432.

A first end 440 of the inlet valve 406 is inserted into the internal passage 430 from the first end 420 of the sliding base 404 and inserted into the outlet valve 408 at the second end 422 of the sliding base 404, allowing the cooling fluid to flow through. An O-ring 436 is positioned at the connection between the inlet valve 406 and the outlet valve 408, preventing leak of the cooling fluid. An axial spring 438 is disposed in the recess 434 of the disc structure 424 and sleeves the inlet valve 406. One end of the axial spring 438 sits in the recess 434 and the other end of the axial spring 438 sits on a raised edge 442 at a second end 444 of the inlet valve 406. As such, the axial spring 438 cannot slides out of the inlet valve 406. The inlet valve 406 is configured to receive a quick connect fitting 446. The quick connect configuration can be adopted in a wide range of applications and can improve the efficiency of coupling assembly 400 in the assembly and disassembly process.

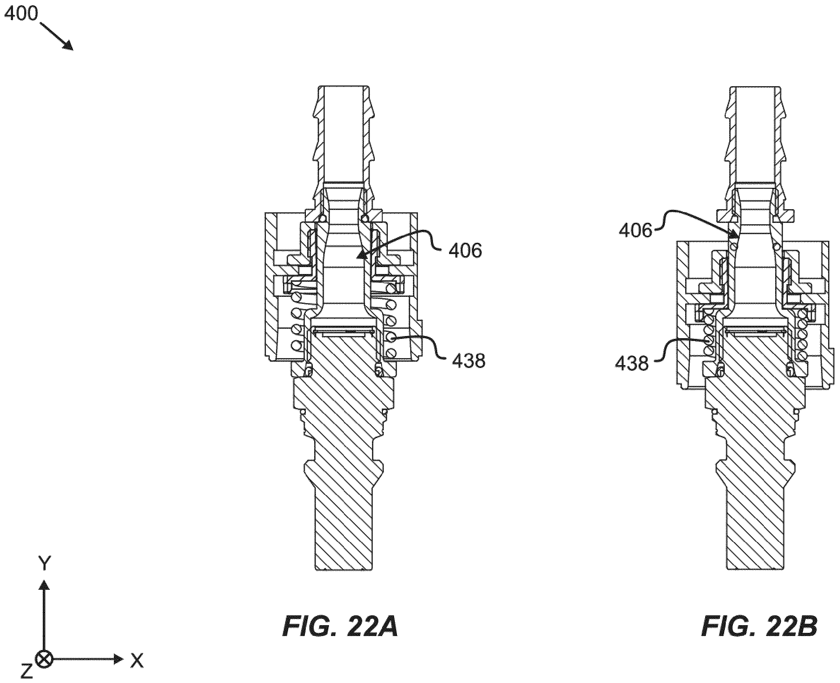

The coupling assembly 400 can provide axial movement, radial movement, and angular movement to the inlet valve 406 to lower the mechanical stress of the connector during assembly and disassembly. Figs. 22A-24C illustrate the coupling assembly 400 in each different movement.

Figs. 22A-22B illustrate cross-section views of a coupling assembly 400 while in axial movement according to an embodiment of the present disclosure. Fig. 22A shows the coupling assembly 400 in its resting position where the axial spring 438 is decompressed. When the inlet valve 406 is pushed in the + y-direction, the axial spring 438 is compressed to allow axial movement. When the inlet valve 406 is not being long pushed, the axial spring 438 decompresses and return the inlet valve 406 to its resting position. This way, the coupling assembly 400 can provide axial movement by utilizing the axial spring 438 in the + y-direction.

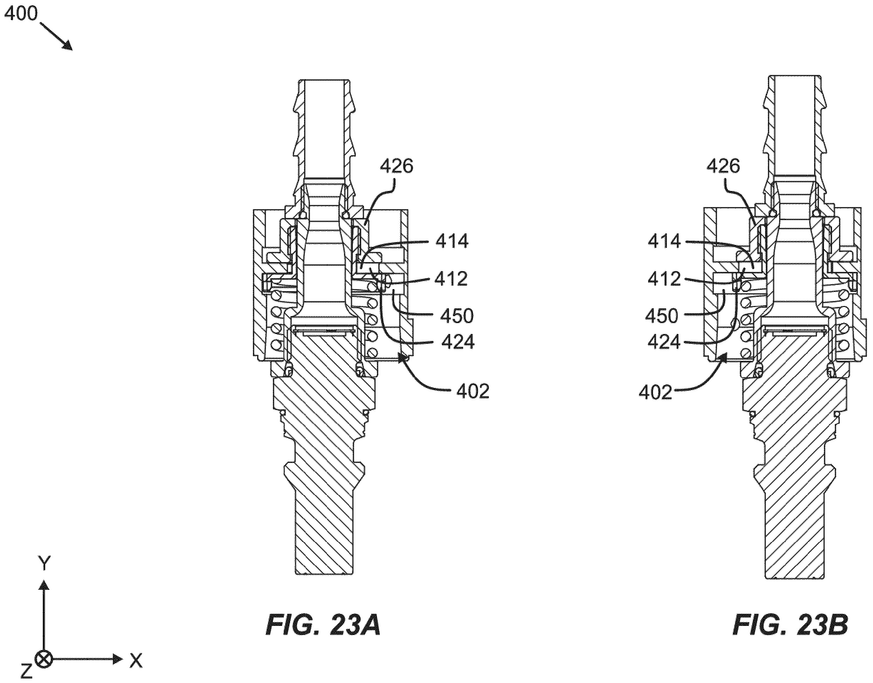

Figs. 23A-23B illustrate cross-section views of the coupling assembly 400 while in radial movement according to an embodiment of the present disclosure. The small opening 412 of the housing unit 402 is positioned between the nut 426 and the disc structure 424 so that the sliding base 404 is not able to move in the y-direction. Specifically, the small opening 412 of the housing unit 402 has a slightly smaller diameter than either the diameter of the nut 426 or the disc structure 424. Further, there is a space 450 left between the edge 414 of the small opening 412 and the sliding base 404 so that the sliding base 404 can move in the x-direction and z-direction. That is, the sliding base 404 can move freely within the small opening 412 on the x-z plane. As such, the coupling assembly 400 can provide radial movement by utilizing the small opening 412 of the housing unit 402. Compare to the coupling assembly 300, the space 450 of the coupling assembly 400 is smaller than the space 350 of the coupling assembly 300. Therefore, the coupling assembly 400 has less radial movement than the coupling assembly 300, which may be advantageous in situations where the installation area is restricted.

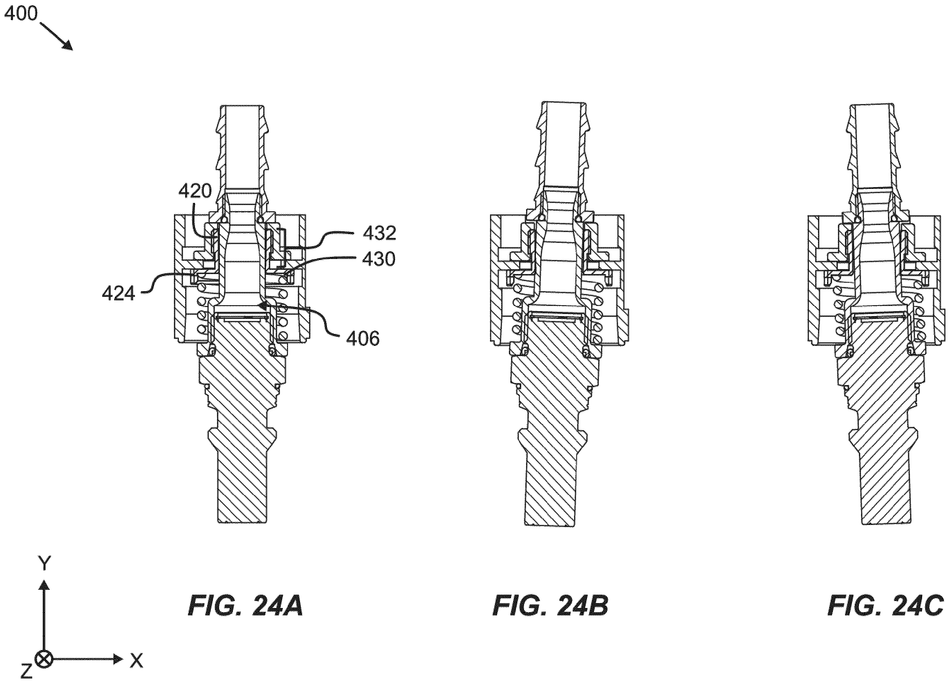

Figs. 24A-24C illustrate cross-section views of the coupling assembly 400 while in angular movement according to an embodiment of the present disclosure. Fig. 24A shows the coupling assembly 400 in its resting position *(i.e.,* center position). The gradually narrowed portion 432 of the internal passage 430 is gradually narrowed from the disc structure 424 towards the first end 420 . The inlet valve 406 can pivot at the narrowest section of the gradually narrowed portion 432,angularly moving few degrees. That is, the inlet valve 406 can rotate by utilizing the narrowest part of the gradually narrowed portion 432 as the pivot point.

Therefore, embodiments disclosed herein are well adapted to attain the ends and advantages mentioned as well as those that are inherent therein. The particular embodiments disclosed above are illustrative only, as the embodiments disclosed may be modified and practiced in different but equivalent manners apparent to those of ordinary skill in the relevant art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. Of course, the disclosed embodiments are merely exemplary embodiments and that various modifications can be made without departing from the spirit and scope of the disclosure. Further, it should be understood that various aspects of the embodiment are not mutually exclusive of each other and can be combined as desired by a person of ordinary skill in the art as a matter of design choices.

The embodiments illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some number. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces.

## Claims

1. A coupling assembly (100, 200, 300, 400) for a blind mate fluid coupling, comprising:
a housing;
a sliding base (126, 204, 304, 404) disposed within the housing, the sliding base (126, 204, 304, 404) having an internal passage (134, 230, 330, 430) comprising a first portion and a second portion connected at a middle opening, the internal passage (134, 230, 330, 430) extend in an axial direction, the second portion of the internal passage (134, 230, 330, 430) has a larger diameter than the first portion of the internal passage (134, 230, 330, 430), the sliding base (126, 204, 304, 404) being movable in a radial direction that is perpendicular to the axial direction and relative to the housing; and
an inlet valve (128, 206, 306, 406) at least partially disposed in the internal passage (134, 230, 330, 430), the inlet valve (128, 206, 306, 406) being movable in the axial direction within the internal passage (134, 230, 330, 430) and angularly pivotable at the first portion.

2. The coupling assembly (100) of claim 1, wherein the first portion has a first opening opposite the middle opening, the first opening is smaller than the middle opening, and the inlet valve (128) is angularly pivotable at the first opening.

3. The coupling assembly (200) of claim 1, wherein the first portion has a first opening opposite the middle opening, the first opening is larger than the middle opening, and the inlet valve (206) is angularly pivotable at the middle opening.

4. The coupling assembly (100, 200, 300, 400) of claim 1, further includes a first spring disposed in the second portion of the internal passage (134, 230, 330, 430), the first spring is compressible by the inlet valve (128, 206, 306, 406) in the axial direction.

5. The coupling assembly (100) of claim 4, wherein the second portion of the internal passage (134) includes a second opening opposite to the middle opening, and the coupling assembly (100) further includes a cap structure on the sliding base (126) that caps the first spring and the inlet valve (128).

6. The coupling assembly (100B) of one of claims 1 to 5, wherein the sliding base (126B, includes a wedge structure (148B) on an outer surface of the sliding base (126B) and disposed within the housing.

7. The coupling assembly (100B, 100C) of claim 6, further comprises:
a second spring disposed in the housing; and
a sliding sleeve (146B) disposed in the housing that includes a supporting structure (158B) with a first side adjacent to the second spring and a second side adjacent to the wedge structure (148B), wherein
the second spring is configured to be compressed by the sliding sleeve (146B) in response to the sliding base (126B) moving in the radial direction, and
the second spring is configured to return the sliding base (126B) to a center position when no compression force is applied.

8. The coupling assembly (100B, 100C) of claim 7, further includes a first spring surrounding at least a portion of the inlet valve (128C) and is compressible by the inlet valve (128C).

9. The coupling assembly (100) of one of claims 1 to 8, wherein the inlet valve (128) includes a clip (142) at an outer surface of the inlet valve (128) and disposed in the internal passage (134).

10. The coupling assembly (200) of one of claims 1 to 9, wherein the first portion has a first opening opposite the middle opening, the second portion has a second opening opposite the middle opening, and an outlet valve (208) is at least partially disposed in the second portion through the second opening and connected with the inlet valve (206) within the second portion.

11. The coupling assembly (300, 400) of one of claims 1 to 9, wherein the first portion further has a first opening opposite the middle opening, the second portion further has a second opening opposite the middle opening, and an outlet valve (308, 408) disposed outside of the internal passage (330, 430) and connected with an end of the inlet valve (306, 406) that is positioned outside of the first opening of the first portion.

12. The coupling assembly (100C, 200D, 300, 400) of one of claims 1 to 11, wherein the inlet valve (128C, 206D, 306, 406) is configured to connect with a quick connect fitting (162C, 264D, 346, 446).

13. The coupling assembly of one of claims 1 to 11, wherein the inlet valve is a quick connect fitting.

14. A coupling assembly (100B, 100C, 200A) for a blind mate fluid coupling, comprising:
a housing;
a sliding base (126B, 204A) at least partially disposed in the housing, the sliding base (126B, 204A) having a wedge structure (148B, 224A) on an outer surface of the sliding base (126B, 204A) and an internal passage that has a first portion and a second portion connected at a middle opening, the internal passage extend in an axial direction, the second portion has a larger diameter than the first portion, the wedge structure (148B, 224A) is disposed within the housing, and the sliding base (126B, 204A) being movable in a radial direction that is perpendicular to the axial direction and relative to the housing;
an inlet valve (128A, 206A) that is at least partially disposed in the internal passage, the inlet valve (128A, 206A) being movable in the axial direction within the internal passage and angularly pivotable at the first portion; and
a sliding sleeve (146B, 242A) disposed in the housing that includes a supporting structure (158B) with a first side adjacent to a first spring disposed in the housing and a second side adjacent to the wedge structure (148B, 224A), wherein
the first spring is configured to be compressed by the sliding sleeve (146B, 242A) in response to the sliding base (126B, 204A) moving in the radial direction, and
the first spring is configured to return the sliding base (126B, 204A) to a center position when no compression force is applied.

15. The coupling assembly (100B, 100C, 200A) of claim 14, wherein the first portion has a first opening opposite the middle opening, the first opening is smaller than the middle opening, and the inlet valve (128B, 206A) is angularly pivotable at the first opening.

16. The coupling assembly of claim 14, wherein the first portion has a first opening opposite the middle opening, the first opening is larger than the middle opening, and the inlet valve is angularly pivotable at the middle opening.

17. The coupling assembly (100B, 100C, 200A) of one of claims 14 to 16, wherein the inlet valve (128B, 128C, 206A) includes a clip at an outer surface of the inlet valve (128B, 128C, 206A) and disposed in the internal passage.

18. The coupling assembly (100B, 100C, 200A) of one of claims 14 to 17, further includes a second spring disposed in the second portion of the internal passage, the second spring is compressible by the inlet valve (128B, 128C, 206A) in the axial direction.

19. The coupling assembly (100B, 100C) of claim 18, wherein the second portion of the internal passage includes a second opening opposite to the middle opening, and the coupling assembly further includes a cap structure on the sliding base (126B) that caps the second spring and the inlet valve (128B, 128C).

20. The coupling assembly (200A) of claim 14, wherein the first portion has a first opening opposite the middle opening, the second portion has a second opening opposite the middle opening, and an outlet valve is at least partially disposed in the second portion through the second opening and connects with the inlet valve (206A) within the second portion.

21. The coupling assembly of claim 14, wherein the first portion further has a first opening opposite the middle opening, the second portion further has a second opening opposite the middle opening, and an outlet valve disposed outside of the internal passage and connects with an end of the inlet valve that is positioned outside of the first opening of the first portion.
